# EUROPEAN PATENT APPLICATION

(11) **EP 4 800 570 A1**
(43) Date of publication of application: **02.09.2026**
(21) Application number: 25161066.3
(22) Date of filing: 28.02.2025
(51) Int. Cl.: G06F 16/3329

(54) **METHOD AND SYSTEM FOR ENABLING A LARGE LANGUAGE MODEL TO RESPOND TO A QUESTION REGARDING AN INPUT DOCUMENT FROM AN INDUSTRIAL DOMAIN THAT EXCEEDS ITS TOKEN LIMIT**

(71) Applicant: Siemens Aktiengesellschaft, 80333 München (DE)
(72) Inventor: Hildebrandt, Marcel, 80805 München (DE); Mogoreanu, Serghei, 81827 München (DE); Ringsquandl, Martin, 83064 Raubling (DE)
(74) Representative: Siemens Patent Attorneys

(57) **Abstract**

The invention relates to enabling a large language model to respond to a question regarding an input document from an industrial domain that exceeds its token limit. To this end a splitting operation (1) splits an input document (ID) into multiple chunks (C), wherein each chunk fits into a token limit of a language model (LM). A computing operation (3) computes an essential information score (EIS) for each token of each chunk, wherein for each chunk, the tokens of that chunk are provided as input to the language model and output is received from the language model that is used for computing the essential information scores. A selecting operation (4) selects for each chunk informative tokens (IT) based on the highest essential information scores. An appending operation (5) appends the informative tokens to a prompt containing a question and/or a task description, and sends the prompt to a large language model (LLM). A receiving operation (6) receives a response (O) from the large language model. At least some of the embodiments are fully LLM-based and limit the loss of context by substantially increasing any off-the-shelve LLM context length, in spite of the LLM's token limit. This has the potential to significantly increase the number of industrial applications of LLMs, as well as to improve the efficiency and performance of LLM integration into industrial applications such as engineering assistance.

## Description

### Technical Field

This invention relates to enabling a large language model to respond to a question regarding an input document from an industrial domain that exceeds its token limit.

### Background Art

The token limit in the context of large language models (LLMs) refers to a maximum number of tokens that the model can process in a single input sequence. This limit is determined by the architecture and design of the specific model. For example, one of the largest publicly available LLMs - GPT-4 - has a token limit of 32.000 tokens.

Documents typically found in industry (e.g., product specifications, documentation) can contain hundreds of pages, i.e., millions of tokens. As a direct consequence, even the largest state-of-the-art LLMs are incapable of processing these documents, and therefore, assisting a user with a task that requires the context of the entire document. For example, a typical Bill-of-Materials (BoM) contains thousands of components, each possessing hundreds of technical attributes. The simple task of retrieving all components of a specified type cannot be easily solved with the help of LLMs simply because the textual representation of the BoM would not fit within the token limit. The same holds true for Piping and Instrumentation Diagrams (P&IDs), which are commonly serialized in the form of an XML document and may contain hundreds of interconnected equipment components and control devices.

On the other hand, traditional retrieval approaches without the use of LLMs are limited in semantics and reasoning. They can only perform keyword- or vector-search. Combined approaches are called Retrieval-augmented generation (RAG), where keyword or vector search finds relevant document snippets first and feeds these into the LLM for final question answering. This can to some degree alleviate these problems, but the retrieval mechanism remains a significant bottleneck.

### Summary of Invention

It is an object of the present invention to identify a problem in the prior art and to find a corresponding technical solution.

The invention is defined in the independent claims. Further advantageous arrangements and embodiments of the invention are set forth in the respective dependent claims.

According to the method for enabling a large language model to respond to a question regarding an input document from an industrial domain that exceeds its token limit, the following operations are performed by components, wherein the components are hardware components and/or software components executed by one or more processors:
- splitting an input document into multiple chunks, wherein each chunk fits into a token limit of a language model,
- computing an essential information score for each token of each chunk, wherein for each chunk, the tokens of that chunk are provided as input to the language model and output is received from the language model that is used for computing the essential information scores,
- selecting, for each chunk, informative tokens based on the highest essential information scores,
- appending the informative tokens to a prompt containing a question and/or a task description, and sending the prompt to a large language model, and
- receiving a response from the large language model.

The system for enabling a large language model to respond to a question regarding an input document from an industrial domain that exceeds its token limit, comprises a processor configured for:
- splitting an input document into multiple chunks, wherein each chunk fits into a token limit of a language model,
- computing an essential information score for each token of each chunk, wherein for each chunk, the processor provides the tokens of that chunk as input to the language model and receives output from the language model that is used for computing the essential information scores,
- selecting, for each chunk, informative tokens based on the highest essential information scores,
- appending the informative tokens to a prompt containing a question and/or a task description, and sending the prompt to a large language model, and
- receiving a response from the large language model.

The following advantages and explanations are not necessarily the result of the object of the independent claims. Rather, they may be advantages and explanations that only apply to certain embodiments or variants.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, or any other communication devices that can process data with computer support, for example processors or other electronic devices for data processing. Computers can in particular comprise one or more processors and memory units.

The method and system, or at least some of their embodiments, enable LLM-based inference on a long input document by decomposing the tokens of the input document with minimal loss of context. The method and system, or at least some of their embodiments, have the potential to significantly increase the number of industrial applications of LLMs, as well as to improve the efficiency and performance of LLM integration into industrial applications such as engineering assistance.

The method and system, or at least some of their embodiments, are fully LLM-based and limit the loss of context by substantially increasing any off-the-shelve LLM context length, in spite of the LLM's token limit.

The method and system, or at least some of their embodiments, are advantageous compared to a mere summarization of the input document, as summarization may overlook important details or nuances in the text.

The method and system, or at least some of their embodiments, are also advantageous compared to manual selection of relevant parts of the input document, as it requires human intervention and a prior understanding of the document contents.

### Description of Embodiments

In an embodiment of the method and system, the computing operation is characterized by
- the input being passed through a decoder-only transformer part of the language model,
- the output from the language model providing a prediction probability for each token or enabling computation of a prediction probability for each token, and
- computing the highest essential information scores for the tokens with the lowest prediction probability.

In an embodiment of the method and system, the output from the language model is a next-token probability distribution for each token. The prediction probability of each token is extracted from the next-token probability distribution for the previous token in the respective chunk for the respective token.

In an embodiment of the method and system, when computing the essential information score for each token, not only the prediction probability of the token is considered, but also a position of the token within the respective chunk.

In an embodiment of the method and system, the computing operation is characterized by
- for each chunk, passing the tokens of that chunk as input through an encoder-only transformer part of the language model, and receiving as the output from the language model an embedding of the chunk, and
- for each token of the chunk,
   - masking the token to form a masked chunk and providing the masked chunk as input to the encoder-only transformer part of the language model, and receiving as the output from the language model an embedding of the masked chunk,
   - computing the essential information score for the token proportional to a shift between the embedding of the chunk and the embedding of the masked chunk.

In an embodiment of the method and system, the language model is
- an encoder-decoder model, in particular a T5 large language model,
- an encoder-only model, in particular a BERT model or a Sentence-BERT model, or
- a domain-specific language model.

In an embodiment of the method and system, the language model is the large language model or a different language model.

In an embodiment of the method and system, the selecting operation is adjusted or repeated until a token limit of the large language model is reached.

An embodiment of the method and system comprises the additional operation of outputting, by a user interface, the response, and/or feeding the response into an Al module for further processing.

An embodiment of the method and system comprises the additional operation of tokenizing, by a tokenizer, before or after the splitting operation each chunk to determine its tokens.

In an embodiment of the method and system, the tokenizer is a custom tokenizer that ensures that semantics are matched to tokens, in particular, by assigning each identifier of industrial equipment to a single token.

In an embodiment of the method and system, the input document is a single document or a set of documents.

The computer program product comprises instructions which, when the program is executed by a computer, cause the computer to carry out the method.

The provisioning device for the computer program product stores and/or provides the computer program product.

### Brief Description of the Drawing

The foregoing and other aspects of the present invention are best understood from the following detailed description when read in connection with the accompanying drawings. For the purpose of illustrating the invention, the drawings show embodiments that are presently preferred. However, the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:
- Fig. 1: shows a first embodiment,
- Fig. 2: shows another embodiment,
- Fig. 3: shows a flowchart of a possible exemplary embodiment,
- Fig. 4: shows an embodiment using a decoder-only transformer DOT, and
- Fig. 5: shows another embodiment using a decoder-only transformer DOT.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

Devlin, Jacob, et al.: "BERT: Pre-training of Deep Bidirectional Transformers for Language Understanding", 2018, arXiv:1810.04805v2 [cs.CL], available on the internet at https://doi.org/10.48550/arXiv.1810.04805 on 26.02.2025, disclose the BERT language model. The entire contents of that document are incorporated herein by reference.

Reimers, Nils, and Iryna Gurevych: "Sentence-BERT: Sentence Embeddings using Siamese BERT-Networks", EMNLP 2019, arXiv:1908.10084v1, available on the internet at https://doi.org/10.48550/arXiv.1908.10084 on 26.02.2025, disclose the Sentence-BERT language model. The entire contents of that document are incorporated herein by reference.

Yao, Wenlin, et al.: "How do Words Contribute to Sentence Semantics? Revisiting Sentence Embeddings with a Perturbation Method", Proceedings of the 17th Conference of the European Chapter of the Association for Computational Linguistics, 2023, disclose an algorithm to determine how words contribute to sentence semantics. The entire contents of that document are incorporated herein by reference.

### Description of Examples

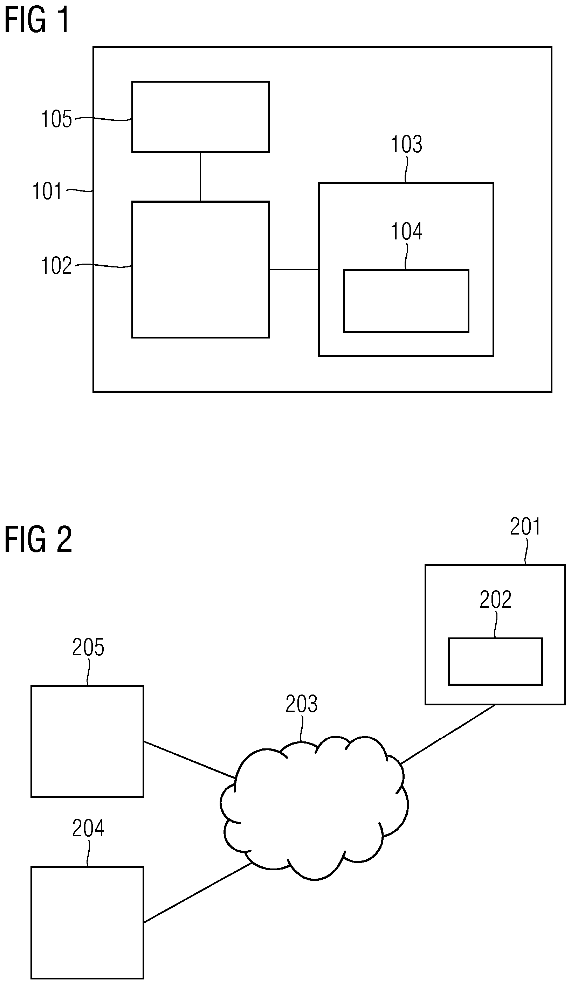

Fig. 1 shows a sample structure for computer-implementation of the invention which comprises:
(101) computer system
(102) processor
(103) memory
(104) computer program (product)
(105) user interface

In this embodiment of the invention the computer program 104 comprises program instructions for carrying out the invention. The computer program 104 is stored in the memory 103 of the computer system 101. The computer system 101 may carry out the invention by executing the program instructions of the computer program 104 by the processor 102. Results of the invention may be presented on the user interface 105. Alternatively, they may be stored in the memory 103 or on another suitable means for storing data.

Fig. 2 shows another sample structure for computer-implementation of the invention which comprises:
(201) provisioning device
(202) computer program (product)
(203) computer network/Internet
(204) computer system
(205) mobile device/smartphone

In this embodiment the provisioning device 201 stores a computer program 202 which comprises program instructions for carrying out the invention. The provisioning device 201 provides the computer program 202 via a computer network/Internet 203. By way of example, a computer system 204 or a mobile device/smartphone 205 may load the computer program 202 and carry out the invention by executing the program instructions of the computer program 202.

In a variation of this embodiment, the provisioning device 201 is a computer-readable storage medium, for example a SD card, that stores the computer program 202 and is connected directly to the computer system 204 or the mobile device/smartphone 205 in order for it to load the computer program 202 and carry out the invention by executing the program instructions of the computer program 202.

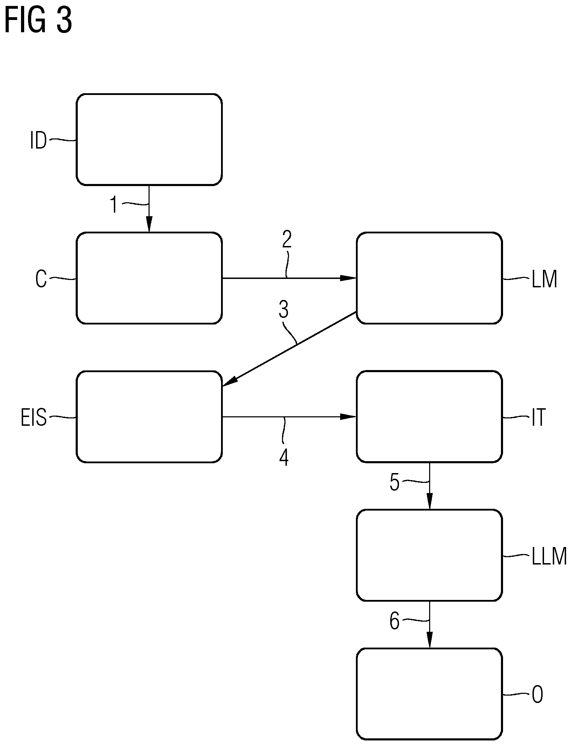

Preferably, the embodiments shown in Figs. 3 to 5 can be implemented with a structure as shown in Fig. 1 or Fig. 2.

The embodiments described in the following provide novel inference capabilities for LLMs that allow processing documents that are too large to fit within the inherent token limit.

It is widely known from the state of the art that the transformer architecture originally consists of an encoder and a decoder. Due to its high potential, many variations of this architecture are in use today, including encoder-only transformer architectures, decoder-only transformer architectures, and encoder-decoder-transformer architectures. Some large language models such as those from the GPT family have a decoder-only transformer architecture, in other words, they only use the decoder part of the original transformer architecture.

Fig. 3 shows the basic steps of the embodiments described in the following. The setting in which these embodiments operate assumes that a user prompts a large language model LLM with a question (wherein the question can also be or include a task) along with an input document ID containing necessary context for answering the question. An example could be the user asking the large language model LLM to identify all valves in a provided Process and Instrumentation Diagram (P&ID) as input document ID. The input document ID has a size that does not fit within the token limit of the large language model LLM. The input document ID can also be a set of multiple documents that, alone or together, do not fit within the token limit of the large language model LLM.

In a splitting operation 1, the input document ID is split into multiple chunks C (independent pieces) which are small enough to fit into a token limit of a language model LM. As will be described below with regard to various embodiments, the language model LM can either be the large language model LLM itself or a different language model. Preferably, the splitting logic of the splitting operation 1 is use-case-specific. For example, in the above-mentioned P&ID use case, a preferable embodiment can ensure to only split on completed XML tags, and not in-between words.

After the splitting operation 1, each chunk C is tokenized by a tokenizer in a tokenizing operation 2. In a variation of the current embodiment, the tokenizing operation 2 can be executed before the splitting operation.

The vocabulary of current (large) language models often uses chunked words as tokens (e.g., tokens "cur" and "ious" for the word "curious"). However, this kind of tokenization can create problems when the input document ID contains complex and long identifiers for technical equipment, as is common in the industrial field. If a long identifier is broken down into many tokens, then the described embodiments could be hindered in identifying the most informative tokens, as the semantics of each token are not clear. Preferably, the tokenizing operation 2 is performed by a custom tokenizer that ensures that semantics are matched to tokens, for example, by assigning each long identifier to a single token. In case a conventional tokenizer is used, at least some of the embodiments can treat tokens belonging to the same semantic unit (e.g., a long identifier) as a group, as will be described below.

In a computing operation 3, a processor computes an essential information score EIS for each token of each chunk C, wherein for each chunk C, the processor provides the tokens of that chunk C as input to the language model LM and receives output from the language model LM. In other words, the tokens of each chunk C are passed through the language model LM. If the language model LM is not executed locally, then communication with the language model LM is performed by a network interface. Based on the output of the language model LM, the processor computes an essential information score EIS for each token of each chunk. This serves the aim of identifying tokens with the highest essential information score EIS.

In a selecting operation 4, for each chunk C, informative tokens IT are selected based on the highest essential information scores EIS calculated in the computing operation 3. These informative tokens IT contain the "essence" of the respective chunks C.

It is possible to control how much contextual information from the input document ID is inadvertently lost by increasing the number of informative tokens IT in the selecting operation 4. For example, the count of informative tokens IT can be increased until the token limit of the large language model LLM is reached, while considering an amount of tokens already consumed by the question itself.

In an appending operation 5, the informative tokens IT are appended to the user's question (or task) and sent to the large language model LLM as a prompt. If the large language model LLM is not executed locally, then sending is performed by a network interface. Only keeping the informative tokens IT (as opposed to all tokens necessary for representing the chunks C) ensures that the final input fits within the token limit of the large language model LLM.

In a receiving operation 6, a response O is received from the large language model LLM. If the large language model LLM is not executed locally, then receiving is performed by a network interface.

For example, the received response O can be output by a user interface to a user or fed into an Al module for further processing.

In an embodiment, the essential information score EIS indicates how difficult it is for the language model LM to predict the respective token. According to this embodiment, a high essential information score EIS indicates that the respective token contains essential information that cannot be derived from the rest of the tokens. If the respective token is hardest to predict, then it has the lowest prediction probability. The processor assigns the highest essential information scores EIS to the tokens with the lowest prediction probability.

As mentioned above, the language model LM can either be the large language model LLM itself or a different language model, including a different large language model. In case different models are used, the same tokenizer needs to be used with both models. For the current embodiment, the computing operation 3 is implemented by passing the tokens of each chunk C forward through a decoder-only transformer part of the language model LM, which outputs a prediction probability for each token. The language model LM may have a decoder-only transformer architecture or an encoder-decoder-transformer architecture, but in any case, only the decoder-only transformer part of the language model LM is used for these forward passes.

For example, if the language model LM is the large language model LLM itself and if the input document ID is split into n chunks C, then n+1 forward passes are performed through the large language model LLM: One for each chunk and one for the final prompt after the appending operation 5.

With regard to the computational costs of these forward passes, a smaller and/or cheaper language model LM may be used for the initial n forward passes for each chunk. In that case, only the final prompt after the appending operation 5 needs to be sent to the large language model LLM itself.

While the current embodiment requires n+1 forward passes for n chunks C and may lose some context from the input document ID (which can be controlled through an increase in the number of informative tokens IT preserved by the selecting operation 4), it can substantially increase the context length despite the given token limit, enabling use cases that would otherwise not be possible to address with the help of LLMs.

For example, when provided with an input document ID that represents a P&ID in a standardized format, the current embodiment is expected to only preserve details that are hard to predict given the surrounding context, such as identifiers and non-standard attributes & values. Repeated tokens (e.g., related to XML syntax) and easy to predict attributes are dropped.

With regard to the forward passes of the tokens of each chunk C through the decoder-only transformer part of the language model LM, k tokens of a given chunk C form an input sequence that is processed 1-by-1 when passed through the decoder-only transformer part. With each token, an internal next-token probability distribution is created (k in total). Conventional use of the decoder-only transformer part would only access the final probability distribution (to generate a k+1-th token). The current embodiment, however, accesses the next-token probability distribution for each token of the chunk C as a means of verifying whether the next observed token (the next token known to occur in the chunk C) is predictable by the language model LM.

### Weighted Essential Information Score

The following section describes an advantageous implementation for computing the essential information score for the current embodiment.

Given a document chunk *D =* {*x₁, x₂, ... xₜ, ..., xₙ*} made of n tokens and LLM vocabulary embedding matrix ***E***.

A last layer token representation ***x**ₜ* is used to predict a next token *X*_{*t+*1} (as random variable here) with last layer key, query and value matrices ***K, Q, V.*** $P \left(\left.{X}_{t + 1}\right|{x}_{t},{x}_{t + 1},…\right) = softmax \left(E{x}_{t}^{T}\right)$ ${x}_{t} = softmax \left({K}_{\left[{x}_{t}, {x}_{t - 1}, {x}_{t - 2 , ⋯}\right]}{Q}_{\left[{x}_{t}\right]}^{T}\right) {V}_{\left[{x}_{t}\right]}$

If *p*_{*x*_{*t*+1}} *= P*(*X*_{*t+*1} *= x*_{*t+*1}|*xₜ, x*_{*t-*1}, *...* ), i.e. the probability of the observed next token, is high, it means that the preceding tokens contain all information and *x*_{*t+*1} does not give new information.

If *P*(*X*_{*t+*1} *= x*_{*t*+1}|*xₜ, x*_{*t-*1}*, ...* ) is low, it means that *x*_{*t+*1} adds new information to its predecessors and is therefore a good candidate for conveying essential document information.

Another consideration is the amount of preceding context that is available to every token. Since *x*_{*t+*1} can attend to all prior tokens, the closer t+1 is to the end of the chunk the more information it can potentially contain.

So the advantageous implementation uses a weighted essential information score that considers low token probability and "closeness" to end of chunk: ${EIscore}_{{x}_{t + 1}} = \left(1-{p}_{{x}_{t + 1}}\right) ∗ \left(1-{w}_{pos}\left(n-\left(t+1\right)\right)\right)$ where *wₚₒₛ* may be experimentally chosen.

More formally, **Algorithm A** contains pseudo code representing the current embodiment.

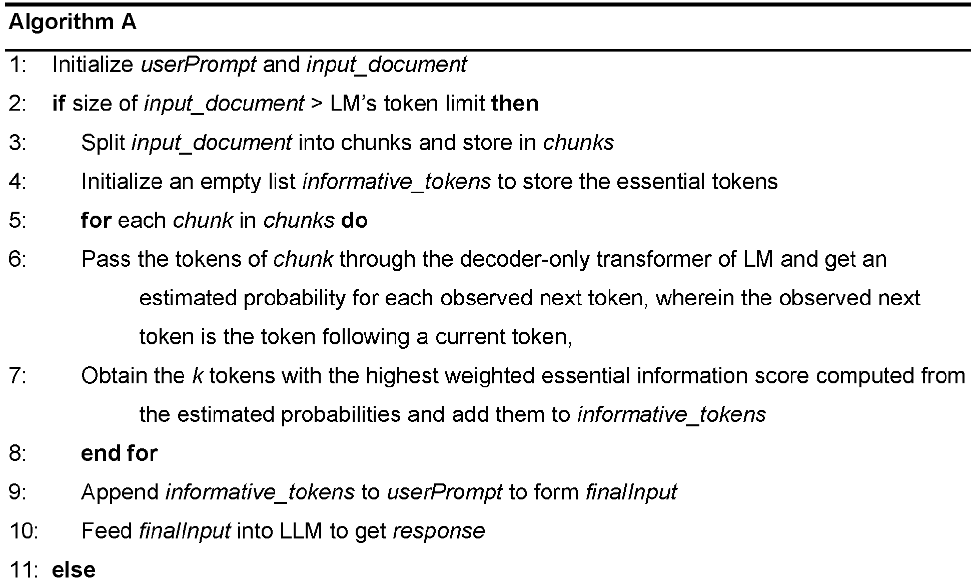

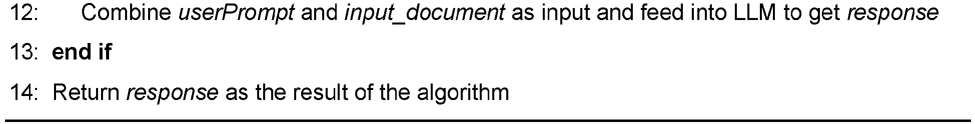

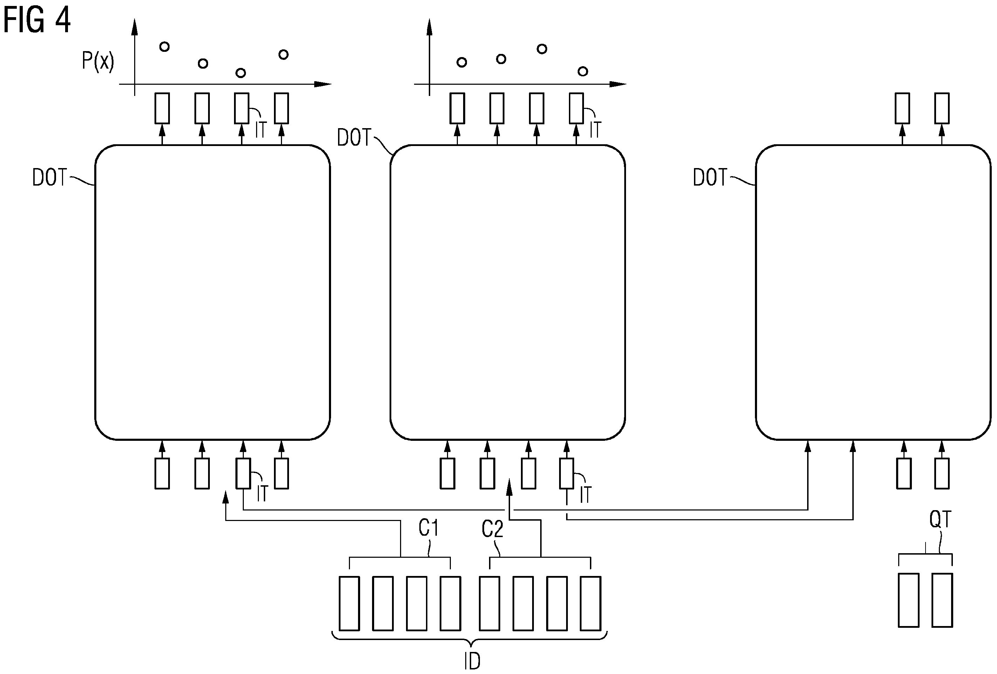

Fig. 4 shows a simplified example. An input document ID consisting of eight tokens is divided into a first chunk C1 and a second chunk C2, four tokens each. Each chunk C1, C2 is fed into a decoder-only transformer DOT to identify informative tokens IT with lowest prediction probability P(x). The identified informative tokens IT are appended to two tokens that represent a user's question QT to obtain a final response, using a final forward pass through the decoder-only transformer DOT.

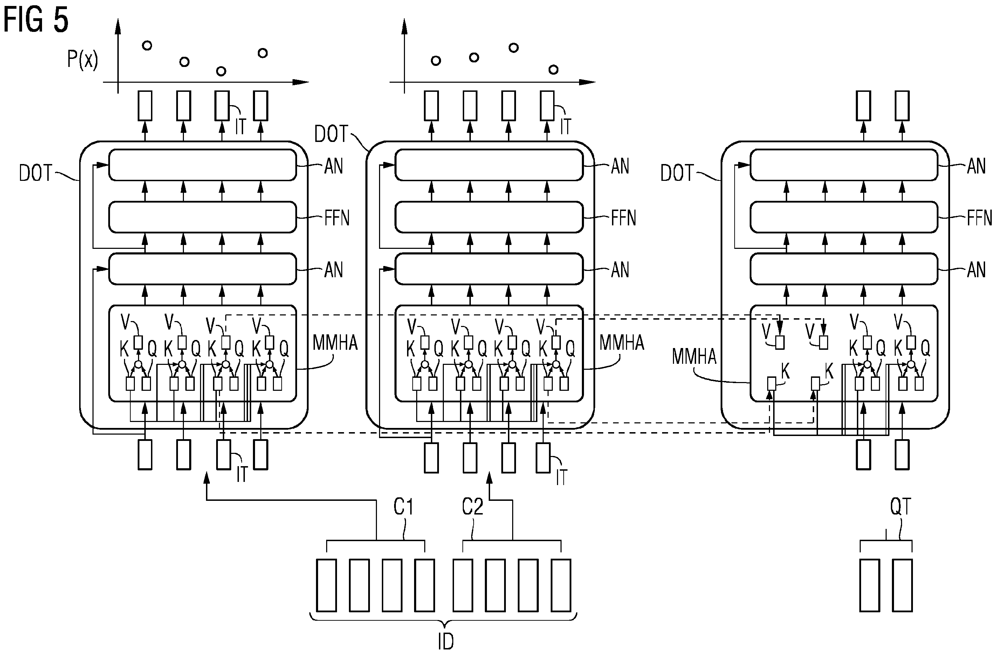

Fig. 5 shows a more specific implementation as compared to Fig. 4. Here, the decoder-only transformer DOT has an architecture as known from the state of the art. Therefore, it represents each input token with query vector Q, a key vector K, and a value vector V in a masked multi-head attention module MMHA.

For example, each token can be encoded to an embedding using an embedding layer. A position encoding layer can encode the position of each token, for example, as a vector that is added to each token embedding to encode sequential information. As a result, each token embedding captures the meaning and position of the respective token. The query vector Q, key vector K, and value vector V are computed from each token embedding.

Processing in the masked multi-head attention module MMHA is followed by an add & normalize step AN, a feed forward layer FFN, for example a small multilayer perceptron consisting of two fully connected layers with a nonlinear activation function in between, and another add & normalize step AN. To put it simply, the decoder-only transformer DOT computes a prediction probability P(x) for each token. For a more detailed and accurate description of the actual processing and output, the above section Weighted Essential Information Score should be consulted.

Fig. 5 illustrates that when feeding the informative tokens IT together with the question QT into the large language model, the key vectors K and value vectors V of the informative tokens IT may be used in the multi-head attention module MMHA.

Returning to Fig. 3, another embodiment is now introduced where the essential information score EIS indicates how much an embedding shifts if the respective token is masked. Here, the language model LM is either the large language model LLM, or another language model, such as BERT, Sentence-BERT, or a domain-specific language model. The language model LM can be an encoder-decoder model, for example a T5 large language model, or an encoder-only model such as BERT or Sentence-BERT.

An encoder-only part of the language model LM encodes the chunks C and the essential information scores EIS are computed based on a perturbation analysis. When encoding each chunk C, the encoder-only part of the language model LM creates an embedding, which is a vector representing the entire chunk C. By masking individual tokens and hiding them from the language model LM, this embodiment estimates the contribution (importance) of the masked information to the final semantics of the chunk C. The underlying assumption is that the semantic importance of a word in a sentence is proportional to how much the new sentence representation drifts from the original sentence representation if that word is masked. The essential information score EIS of that word is given by the shift in the embedding space.

In other words, the current embodiment identifies and utilizes shifts in text embeddings for identifying the informative tokens IT (with the highest essential information scores EIS) in each chunk C. The informative tokens IT can be seen as a compressed version of the original text which can be processed by the large language model LLM with minimal loss of context.

The current implementation computes the essential information score EIS for a specific token using the following steps:
1. Pass each chunk to the language model LM to obtain an embedding.
2. Masking: Replace the token for which the essential information score EIS is to be computed with a mask token to form a masked chunk.
3. Prediction: Pass the masked chunk to the language model (LM) to obtain an embedding.
4. Comparison: Compare the embeddings generated in steps 1 and 3, for example, by computing their distance in the embedding space. In particular, the distance can be computed using a suitable metric, such as cosine similarity.

The following algorithm, written in pseudo-code, details the current implementation. In the pseudo-code the term "mask" is used to indicate the action of masking a particular token in a chunk, and the compute_shift function calculates the Euclidean distance between the original and the masked chunk representations:

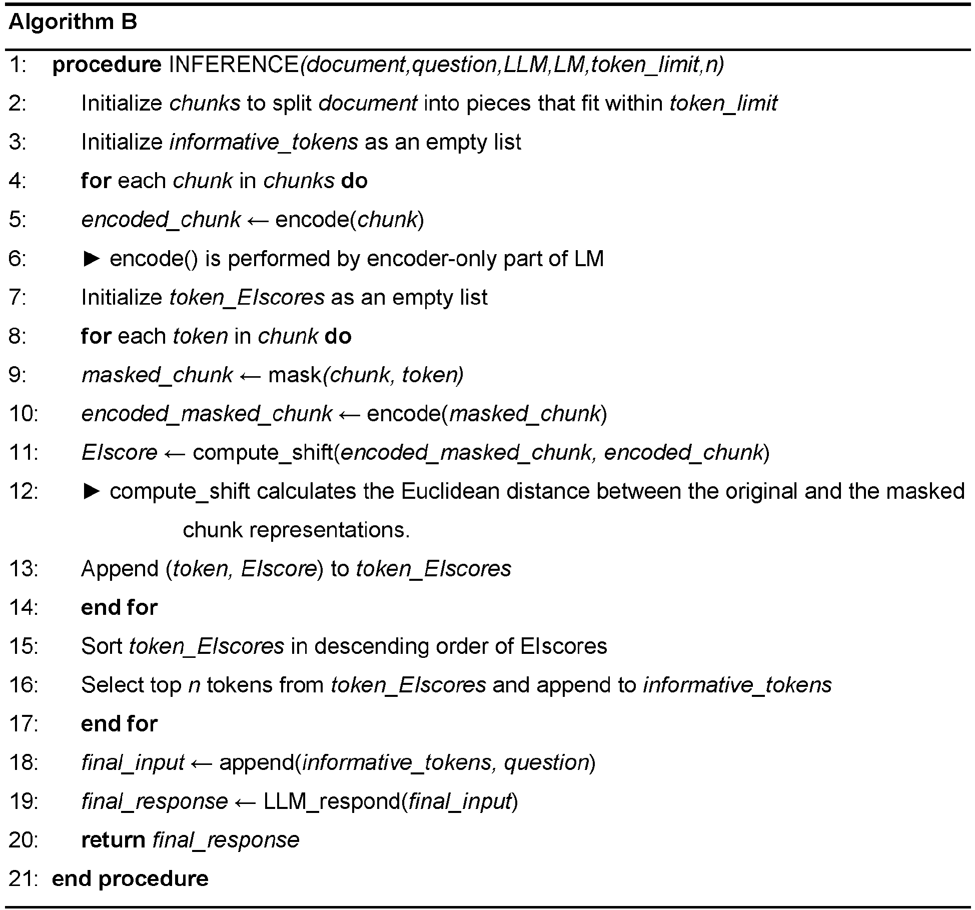

In case a group of tokens represents a single semantic unit, for example a long identifier of industrial equipment, then a variant of the current embodiment masks the entire group of tokens and assigns the determined essential information score to the entire group of tokens.

An example for a chunk C, here a long original sentence, and the resulting compressed version (formed by the informative tokens IT) could be:
Original Sentence (chunk C):
   "During the manufacturing process of the chemical plant, the raw materials are initially passed through a grinder to ensure they are uniformly sized before being mixed in a large tank with water and a variety of other chemicals under controlled temperature and pressure conditions."
Reduced Sentence (subset of original, consisting of the informative tokens IT):
   "Raw materials passed through grinder, mixed large tank with water other chemicals under controlled conditions."

In the reduced sentence, the key actions (grinding, mixing) and conditions (water, chemicals, specific temperature, and pressure) are preserved while removing some additional details to make the sentence shorter and more concise.

An example for a long (DEXPI) XML chunk describing an equipment used within a P&ID and what the resulting compressed version could look like:
Original XML chunk: 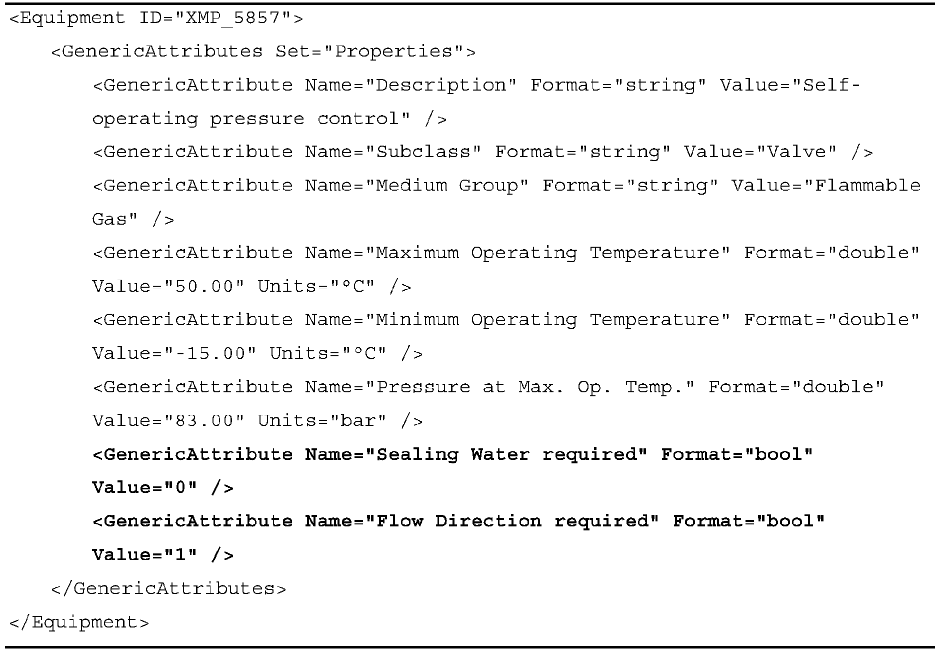
Compressed version (informative tokens IT):

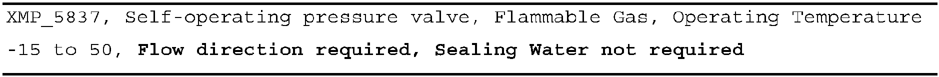

Note that in the compressed version, the Boolean attributes are correctly preserved, despite the corresponding values ("0" / "1") being relatively predictable (50%) given that the modality is known (Format="bool").

### Retrieval Augmented Generation

The previously described embodiments also apply to retrieval augmented generation (RAG) use cases, where a set of retrieved documents is too large to fit into the token limit of the large language model LLM. Finding the Top-n tokens in a set of k retrieved documents can be achieved by finding the n / k tokens for each document individually. With regard to the embodiments described above, the set of documents is acting as the input document ID.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform acts corresponding to the operations of the method described above.

The instructions for implementing processes or methods described herein may be provided on computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "A, B, and/or C" as an alternative expression may provide that one or more of A, B, and C may be used.

Independent of the grammatical term usage, individuals with male, female, or other gender identities are included within the term.

## Claims

1. A computer implemented method for enabling a large language model to respond to a question regarding an input document from an industrial domain that exceeds its token limit, wherein the following operations are performed by components, and wherein the components are hardware components and/or software components executed by one or more processors:
- splitting (1) an input document (ID) into multiple chunks (C), wherein each chunk fits into a token limit of a language model (LM),
- computing (3) an essential information score (EIS) for each token of each chunk (C), wherein for each chunk (C), the tokens of that chunk (C) are provided as input to the language model (LM) and output is received from the language model (LM) that is used for computing the essential information scores (EIS),
- selecting (4), for each chunk (C), informative tokens (IT) based on the highest essential information scores (EIS),
- appending (5) the informative tokens (IT) to a prompt containing a question and/or a task description, and sending the prompt to a large language model (LLM), and
- receiving (6) a response (O) from the large language model (LLM).

2. The method of claim 1, wherein the computing operation (3) is **characterized by**
- the input being passed through a decoder-only transformer (DOT) part of the language model (LM),
- the output from the language model (LM) providing a prediction probability for each token or enabling computation of a prediction probability for each token, and
- computing the highest essential information scores (EIS) for the tokens with the lowest prediction probability.

3. The method of claim 2, wherein
- the output from the language model (LM) is a next-token probability distribution for each token, and
- the prediction probability of each token is extracted from the next-token probability distribution for the previous token in the respective chunk (C) for the respective token.

4. The method of claim 3, wherein
- when computing the essential information score for each token, not only the prediction probability of the token is considered, but also a position of the token within the respective chunk.

5. The method of claim 1, wherein the computing operation (3) is **characterized by**
- for each chunk (C), passing the tokens of that chunk (C) as input through an encoder-only transformer part of the language model (LM), and receiving as the output from the language model (LM) an embedding of the chunk (C), and
- for each token of the chunk (C),
- masking the token to form a masked chunk and providing the masked chunk as input to the encoder-only transformer part of the language model (LM), and receiving as the output from the language model (LM) an embedding of the masked chunk,
- computing the essential information score (EIS) for the token proportional to a shift between the embedding of the chunk (C) and the embedding of the masked chunk.

6. The method of claim 5, wherein the language model (LM) is
- an encoder-decoder model, in particular a T5 large language model,
- an encoder-only model, in particular a BERT model or a Sentence-BERT model, or
- a domain-specific language model.

7. The method according to any of the preceding claims,
- wherein the language model (LM) is the large language model (LLM) or a different language model.

8. The method according to any of the preceding claims,
- wherein the selecting operation (4) is adjusted or repeated until a token limit of the large language model (LLM) is reached.

9. The method according to any of the preceding claims, with the additional operation of
- outputting, by a user interface, the response (O), and/or
- feeding the response (O) into an Al module for further processing.

10. The method according to any of the preceding claims, with the additional operation of
- tokenizing (2), by a tokenizer, before or after the splitting operation (1) each chunk (C) to determine its tokens.

11. The method according to claim 10,
- wherein the tokenizer is a custom tokenizer that ensures that semantics are matched to tokens, in particular, by assigning each identifier of industrial equipment to a single token.

12. The method according to any of the preceding claims,
- wherein the input document is a single document or a set of documents.

13. A system for enabling a large language model to respond to a question regarding an input document from an industrial domain that exceeds its token limit, comprising a processor configured for:
- splitting (1) an input document (ID) into multiple chunks (C), wherein each chunk fits into a token limit of a language model (LM),
- computing (3) an essential information score (EIS) for each token of each chunk (C), wherein for each chunk (C), the processor provides the tokens of that chunk (C) as input to the language model (LM) and receives output from the language model (LM) that is used for computing the essential information scores (EIS),
- selecting (4), for each chunk (C), informative tokens (IT) based on the highest essential information scores (EIS),
- appending (5) the informative tokens (IT) to a prompt containing a question and/or a task description, and sending the prompt to a large language model (LLM), and
- receiving (6) a response (O) from the large language model (LLM).

14. A computer program product comprising instructions which, when the program is executed by a computer, cause the computer to carry out a method according to one of the method claims.

15. A provisioning device for the computer program product according to the preceding claim, wherein the provisioning device stores and/or provides the computer program product.
